# EUROPEAN PATENT APPLICATION

(11) **EP 3 952 197 A1**
(43) Date of publication of application: **09.02.2022**
(21) Application number: 21189597.4
(22) Date of filing: 04.08.2021
(51) Int. Cl.: H04L 5/00

(54) **SIGNALING OF PUNCTURED SUB-CHANNELS IN WIRELESS COMMUNICATIONS**

(30) Priority: 07.08.2020 US 202063062575 P; 02.08.2021 US 202117391204
(71) Applicant: MediaTek Singapore Pte. Ltd., Singapore 138628 (SG)
(72) Inventor: LIU, Jianhan, San Jose, 95134 (US); HU, Shengquan, San Jose, 95134 (US); PARE, Jr. Thomas Edward, San Jose, 95134 (US)
(74) Representative: Hoefer & Partner Patentanwälte mbB

(57) **Abstract**

Various examples pertaining to signaling of punctured sub-channels in wireless communications are described. A puncturing pattern is signaled with an extremely-high-throughput, EHT, physical-layer protocol data unit, PPDU, (610). A first station, STA, and a second STA then communicate with each other based on the signaled puncturing pattern (620).

## Description

### CROSS REFERENCE TO RELATED PATENT APPLICATION

The present disclosure is part of a non-provisional patent application claiming the priority benefit of U.S. Provisional Patent Application No. 63/062,575, filed 07 August 2020, the content of which being incorporated by reference in its entirety.

### TECHNICAL FIELD

The present disclosure is generally related to wireless communications and, more particularly, to signaling of punctured sub-channels in wireless communications.

### BACKGROUND

Unless otherwise indicated herein, approaches described in this section are not prior art to the claims listed below and are not admitted as prior art by inclusion in this section.

In next-generation wireless communications such as those implemented in wireless local area networks (WLANs) based on the Institute of Electrical and Electronics Engineers (IEEE) 802.11be standards, puncturing of a sub-channel (e.g., 20MHz in bandwidth) is allowed for non-orthogonal frequency-division multiple access (non-OFDMA) and orthogonal frequency-division multiple access (OFDMA) transmissions. For a non-OFDMA transmission (e.g., to a single user (SU), duplicated SU or full-bandwidth multi-user multiple-input-multiple-output (MU-MIMO)), compression modes are used. For an OFDMA transmission (e.g., to multiple users), non-compression modes are used. However, there exist some incumbent signals in 6GHz which could be licensed or unlicensed, and such incumbent signals usually have a higher priority and thus considered punctured. Thus, how to efficiently provide indication for punctured sub-channels in extremely-high-throughput (EHT) wireless communications remains an issue. Therefore, there is a need for a solution to address this issue.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to signaling of punctured sub-channels in wireless communications. Under various proposed schemes in accordance with the present disclosure, it is believed that issue(s) described herein may be addressed. A method and an apparatus according to the invention are defined in the independent claims. The dependent claims define preferred embodiments thereof.

In one aspect, a method may involve signaling a puncturing pattern with an EHT physical-layer protocol data unit (PPDU). The method may also involve communicating between a first station (STA) and a second STA based on the signaled puncturing pattern.

In another aspect, an apparatus may include a transceiver and a processor coupled to the transceiver. The transceiver may be configured to communicate wirelessly. The processor may signal, via the transceiver, a puncturing pattern with an EHT PPDU. The processor may communicate, via the transceiver, between a first STA and a second STA based on the signaled puncturing pattern.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (loT), Industrial loT (IIoT) and narrowband loT (NB-IoT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example design in accordance with an implementation of the present disclosure.
FIG. 3 is a diagram of an example design in accordance with an implementation of the present disclosure.
FIG. 4 is a diagram of an example design in accordance with an implementation of the present disclosure.
FIG. 5 is a block diagram of an example communication system in accordance with an implementation of the present disclosure.
FIG. 6 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to signaling of punctured sub-channels in wireless communications. According to the present disclosure, a number of possible solutions may be implemented separately or jointly. That is, although these possible solutions may be described below separately, two or more of these possible solutions may be implemented in one combination or another.

It is noteworthy that, although examples described herein and illustrated in the figures may show a first RU of size A and a second RU of size B, as in RU A + RU B, various proposed schemes in accordance with the present disclosure may be implemented with RU A + RU B, or vice versa (e.g., RU B + RU A). In other words, the scope of the present disclosure is not limited to the examples presented herein and, rather, also covers variations thereof. For instance, for a multi-RU group (996 + 484), the order of RUs may be exchanged in different implementations such as, for example, a first RU of size 484 plus a second RU of size 996 in one implementation or, alternatively, a firs RU of size 996 plus a second RU of size 484 in another implementation. Moreover, in the present disclosure, aggregated multiple RUs may be interchangeably referred to as "multi-RU" and "MRU". Thus, in the aforementioned example, the multi-RU group (996 + 484), which is an aggregation of two RUs (namely a 996-tone RU and a 484-tone RU), may be referred to as a multi-RU(996 + 484) or an MRU(996 + 484).

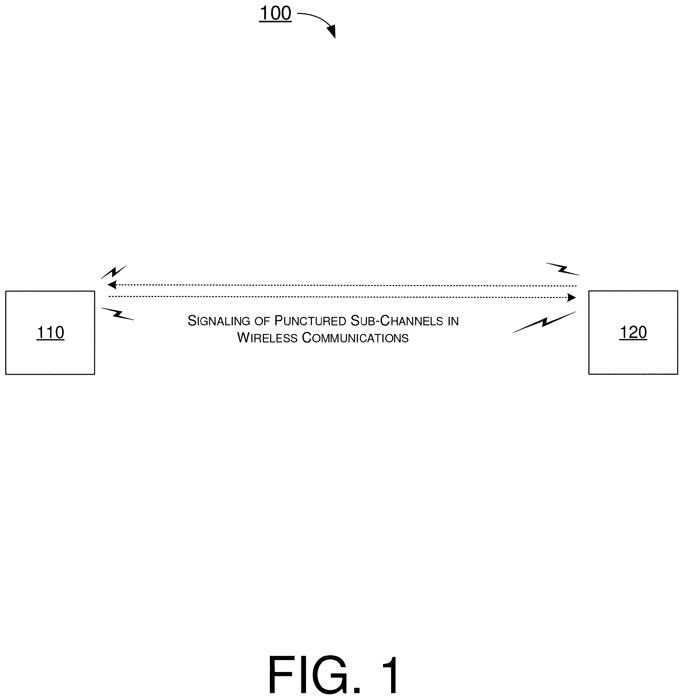

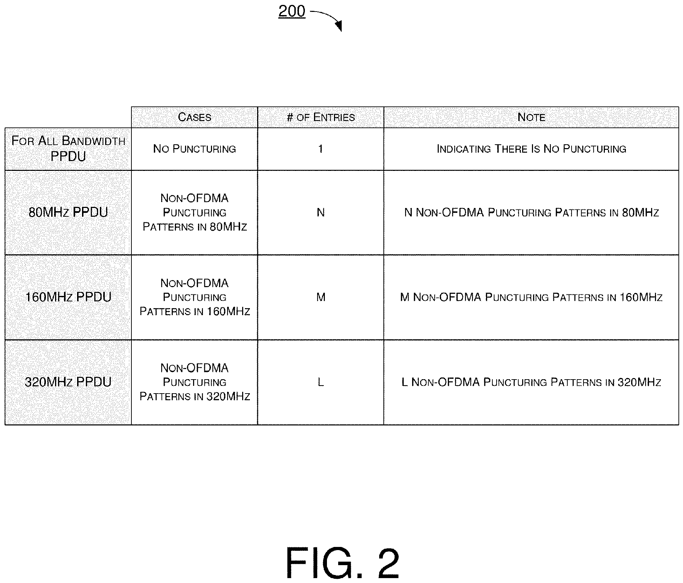

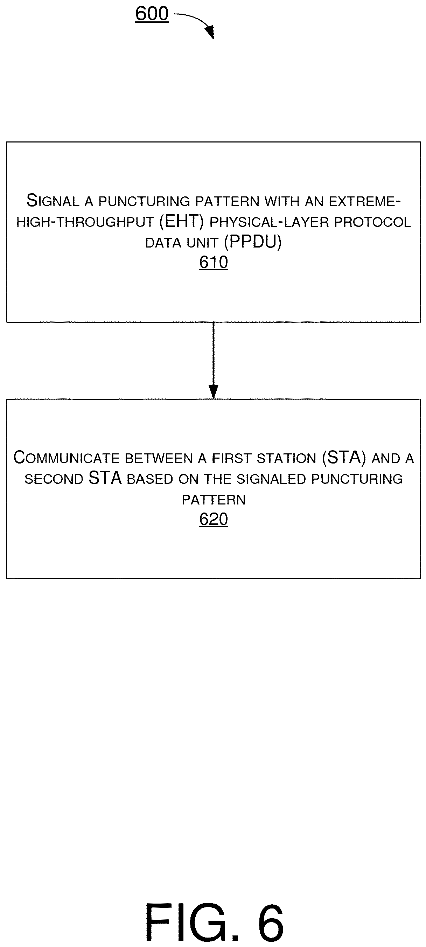

FIG. 1 illustrates an example network environment 100 in which various solutions and schemes in accordance with the present disclosure may be implemented. FIG. 2 ∼ FIG. 6 illustrate examples of implementation of various proposed schemes in network environment 100 in accordance with the present disclosure. The following description of various proposed schemes is provided with reference to FIG. 1 ∼ FIG. 6.

Referring to FIG. 1, network environment 100 may involve a communication entity 110 and a communication entity 120 communicating wirelessly (e.g., in a WLAN in accordance with one or more IEEE 802.11 standards). For instance, communication entity 110 may be a first STA and communication entity 120 may be a second STA, with each of the first STA and second STA being an access point (AP) or a non-AP STA. Under various proposed schemes in accordance with the present disclosure, communication entity 110 and communication entity 120 may be configured to perform signaling of punctured sub-channels in wireless communications, as described herein.

Under a proposed scheme in accordance with the present disclosure, a Universal Signal (U-SIG) field in a given PPDU may be utilized for signaling regarding punctured sub-channels. The U-SIG contains two subfields, namely an EHT Signal (EHT-SIG) Compression subfield and a Sub-Channel Puncturing Indication subfield. The EHT-SIG Compression subfield has 1 bit to indicate compression mode or non-compression mode. The Sub-Channel Puncturing Indication subfield has either 6 bits (which may also be 5 bits) for compression modes or 4 bits (which may also be 3 bits) for non-compression modes.

Under the proposed scheme with respect to global indications of punctured sub-channels in compression modes, whole-band puncturing may be indicated by the Sub-Channel Puncturing Indication subfield. Under the proposed scheme, the EHT-SIG Compression subfield may be set to 1 to indicate compression mode, and the Sub-Channel Puncturing Indication subfield may contain whole-band puncturing information. For instance, only non-OFDMA puncturing patterns may be included in the puncturing indication. As an example, a bandwidth dependent table may be utilized as a global puncturing indication on a non-OFDMA puncturing pattern of an entire PPDU bandwidth.

FIG. 2 illustrates an example design 200 under the proposed scheme. Referring to FIG. 2, a table summarizes puncturing indication (with EHT-SIG Compression set to 1) under design 200. For instance, for a PPDU of any bandwidth, there may be one entry to indicate that there is no puncturing. For a 80MHz PPDU, when there are non-OFDMA puncturing patterns in the 80MHz bandwidth, there may be N entries to indicate N non-OFDMA puncturing patterns in the 80MHz bandwidth. For a 160MHz PPDU, when there are non-OFDMA puncturing patterns in the 160MHz bandwidth, there may be M entries to indicate M non-OFDMA puncturing patterns in the 160MHz bandwidth. For a 320MHz PPDU, when there are non-OFDMA puncturing patterns in the 320MHz bandwidth, there may be L entries to indicate L non-OFDMA puncturing patterns in the 320MHz bandwidth.

Under the proposed scheme with respect to local puncturing indication in non-compression modes, per-80MHz segment puncturing may be indicated in U-SIG by the Sub-Channel Puncturing Indication subfield. Under the proposed scheme, the EHT-SIG Compression subfield may be set to 0 to indicate non-compression mode, and the Sub-Channel Puncturing Indication subfield may contain only puncturing information for the 80MHz segment. For instance, with the EHT-SIG Compression subfield set to 0, a 4-bit bitmap may be used to indicate one or more 20MHz sub-channels within a given 80MHz segment. Under the proposed scheme, the local puncturing indication may be used at reception (Rx) to find the non-punctured content channel(s) for EHT-SIG decoding.

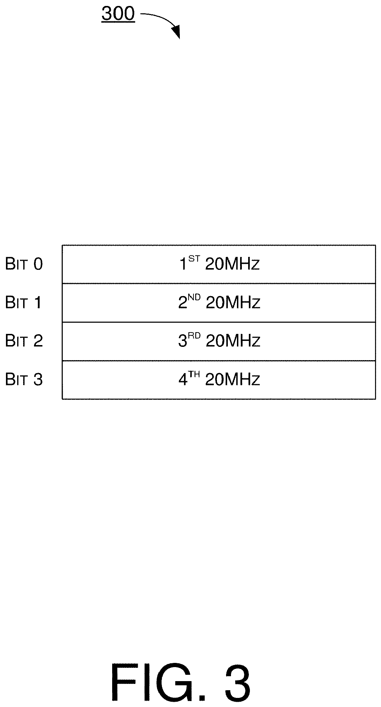

FIG. 3 illustrates an example design 300 under the proposed scheme. Referring to FIG. 3, a 4-bit bitmap may be used to indicate one or more 20MHz sub-channels within a given 80MHz segment. In the example shown in FIG. 3, "0" in the bitmap may indicate no puncturing and "1" in the bitmap may indicate puncturing. Thus, "0110" may indicate the second 20MHz channel and the third 20MHz channel are punctured in this 80MHz segment.

Under the proposed scheme with respect to global puncturing indication in non-compression modes, global puncturing may be indicated in an EHT Signal (EHT-SIG) field, which follows the U-SIG in a given PPDU. For non-compression modes, there are resource unit (RU) allocation subfields in EHT-SIG. Thus, global puncturing may be indicated in EHT-SIG RU allocation subfields for non-compression modes. For instance, a bandwidth dependent table may be utilized to provide the global puncturing indication.

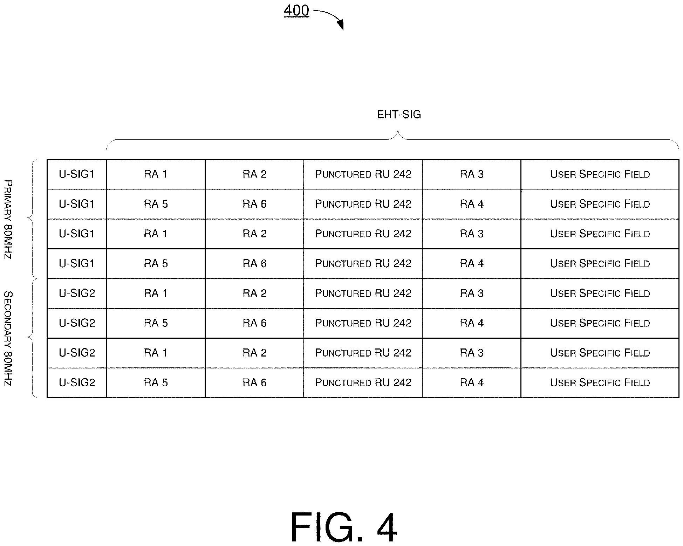

FIG. 4 illustrates an example design 400 under the proposed scheme. Referring to FIG. 4, in a RU allocation table, there may be an entry for "punctured RU 242", which corresponds to a 20MHz punctured sub-channel. For non-compression modes (with EHT-SIG Compression set to 0), punctured RU 242 may be used to indicate the puncturing pattern. For instance, in the example shown in FIG. 4, the fifth 20MHz and the sixth 20MHz are punctured in a 160MHz PPDU having a 80MHz primary segment and a 80MHz secondary segment.

### Illustrative Implementations

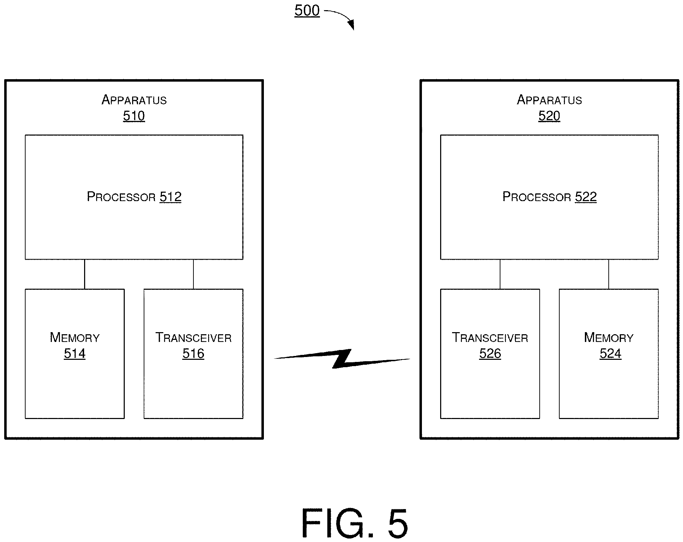

FIG. 5 illustrates an example system 500 having at least an example apparatus 510 and an example apparatus 520 in accordance with an implementation of the present disclosure. Each of apparatus 510 and apparatus 520 may perform various functions to implement schemes, techniques, processes and methods described herein pertaining to signaling of punctured sub-channels in wireless communications, including the various schemes described above with respect to various proposed designs, concepts, schemes, systems and methods described above as well as processes described below. For instance, apparatus 510 may be an example implementation of communication entity 110, and apparatus 520 may be an example implementation of communication entity 120.

Each of apparatus 510 and apparatus 520 may be a part of an electronic apparatus, which may be a STA or an AP, such as a portable or mobile apparatus, a wearable apparatus, a wireless communication apparatus or a computing apparatus. For instance, each of apparatus 510 and apparatus 520 may be implemented in a smartphone, a smart watch, a personal digital assistant, a digital camera, or a computing equipment such as a tablet computer, a laptop computer or a notebook computer. Each of apparatus 510 and apparatus 520 may also be a part of a machine type apparatus, which may be an loT apparatus such as an immobile or a stationary apparatus, a home apparatus, a wire communication apparatus or a computing apparatus. For instance, each of apparatus 510 and apparatus 520 may be implemented in a smart thermostat, a smart fridge, a smart door lock, a wireless speaker or a home control center. When implemented in or as a network apparatus, apparatus 510 and/or apparatus 520 may be implemented in a network node, such as an AP in a WLAN.

In some implementations, each of apparatus 510 and apparatus 520 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 510 and apparatus 520 may be implemented in or as a STA or an AP. Each of apparatus 510 and apparatus 520 may include at least some of those components shown in FIG. 5 such as a processor 512 and a processor 522, respectively, for example. Each of apparatus 510 and apparatus 520 may further include one or more other components not pertinent to the proposed scheme of the present disclosure (e.g., internal power supply, display device and/or user interface device), and, thus, such component(s) of apparatus 510 and apparatus 520 are neither shown in FIG. 5 nor described below in the interest of simplicity and brevity.

In one aspect, each of processor 512 and processor 522 may be implemented in the form of one or more single-core processors, one or more multi-core processors, one or more RISC processors or one or more CISC processors. That is, even though a singular term "a processor" is used herein to refer to processor 512 and processor 522, each of processor 512 and processor 522 may include multiple processors in some implementations and a single processor in other implementations in accordance with the present disclosure. In another aspect, each of processor 512 and processor 522 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 512 and processor 522 is a special-purpose machine specifically designed, arranged and configured to perform specific tasks including those pertaining to signaling of punctured sub-channels in wireless communications in accordance with various implementations of the present disclosure. For instance, each of processor 512 and processor 522 may be configured with hardware components, or circuitry, implementing one, some or all of the examples described and illustrated herein.

In some implementations, apparatus 510 may also include a transceiver 516 coupled to processor 512. Transceiver 516 may be capable of wirelessly transmitting and receiving data. In some implementations, apparatus 520 may also include a transceiver 526 coupled to processor 522. Transceiver 526 may include a transceiver capable of wirelessly transmitting and receiving data.

In some implementations, apparatus 510 may further include a memory 514 coupled to processor 512 and capable of being accessed by processor 512 and storing data therein. In some implementations, apparatus 520 may further include a memory 524 coupled to processor 522 and capable of being accessed by processor 522 and storing data therein. Each of memory 514 and memory 524 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 514 and memory 524 may include a type of read-only memory (ROM) such as mask ROM, programmable ROM (PROM), erasable programmable ROM (EPROM) and/or electrically erasable programmable ROM (EEPROM). Alternatively, or additionally, each of memory 514 and memory 524 may include a type of non-volatile random-access memory (NVRAM) such as flash memory, solid-state memory, ferroelectric RAM (FeRAM), magnetoresistive RAM (MRAM) and/or phase-change memory.

Each of apparatus 510 and apparatus 520 may be a communication entity capable of communicating with each other using various proposed schemes in accordance with the present disclosure. For illustrative purposes and without limitation, a description of capabilities of apparatus 510, as communication entity 110, and apparatus 520, as communication entity 120, is provided below. It is noteworthy that, although the example implementations described below are provided in the context of WLAN, the same may be implemented in other types of networks. Thus, although the following description of example implementations pertains to a scenario in which apparatus 510 functions as a transmitting device and apparatus 520 functions as a receiving device, the same is also applicable to another scenario in which apparatus 510 functions as a receiving device and apparatus 520 functions as a transmitting device.

Under a proposed scheme in accordance with the present disclosure with respect to signaling of punctured sub-channels in wireless communications, processor 512 of apparatus 510 may be implemented in a first STA (e.g., in communication entity 110 as a non-AP STA) and processor 522 of apparatus 520 may be implemented in a second STA (e.g., in communication entity 120 as an AP) in an EHT WLAN. Under the proposed scheme, a puncturing pattern may be signaled with an EHT PPDU between the first STA and the second STA. For instance, processor 512 of apparatus 510 may receive, via transceiver 516, the EHT PPDU that indicates the puncturing pattern from apparatus 520, or vice versa. Moreover, the first STA and the second STA may communicate with each other based on the signaled puncturing pattern. For instance, processor 512 may transmit to and/or receive from apparatus 520 based on the signaled puncturing pattern. Similarly, processor 522 may transmit to and/or receive from apparatus 510 based on the signaled puncturing pattern.

In some implementations, in signaling the puncturing pattern, processor 512 or processor 522 may signal the puncturing pattern in a U-SIG field of the EHT PPDU.

In some implementations, the U-SIG field may contain an EHT-SIG Compression subfield and a Sub-Channel Puncturing Indication subfield. The EHT-SIG Compression subfield may indicate either a compression mode or a non-compression mode, and the Sub-Channel Puncturing Indication subfield may contain puncturing information.

In some implementations, in signaling the puncturing pattern, processor 512 or processor 522 may provide a global puncturing indication (e.g., with a bandwidth dependent table) in the U-SIG field for a non-OFDMA transmission by: (a) setting a bit of the EHT-SIG Compression subfield to 1 to indicate the compression mode; and (b) indicating whole-band puncturing information in the Sub-Channel Puncturing Indication subfield.

In some implementations, in indicating the whole-band puncturing information, processor 512 or processor 522 may indicate the whole-band puncturing information on a 80MHz bandwidth, a 160MHz bandwidth or a 320MHz bandwidth in an event that the EHT PPDU is a 80MHz PPDU, a 160MHz PPDU or a 320MHz PPDU, respectively.

In some implementations, in indicating the whole-band puncturing information, processor 512 or processor 522 may indicate the whole-band puncturing information with a first number of entries, a second number of entries or a third number of entries in an event that the EHT PPDU is a 80MHz PPDU, a 160MHz PPDU or a 320MHz PPDU, respectively. The first number, the second number and the third number may be different from each other.

In some implementations, in signaling the puncturing pattern, processor 512 or processor 522 may provide a local puncturing indication in the U-SIG field for an OFDMA transmission by: (a) setting a bit of the EHT-SIG Compression subfield to 0 to indicate the non-compression mode; and (b) indicating per-80MHz segment puncturing information in the Sub-Channel Puncturing Indication subfield.

In some implementations, in indicating the per-80MHz segment puncturing information, processor 512 or processor 522 may indicate puncturing information on a 80MHz segment using a 4-bit bitmap with each bit indicating whether or not a respective 20MHz sub-channel of four 20MHz sub-channels in the 80MHz segment is punctured.

In some implementations, in signaling the puncturing pattern, processor 512 or processor 522 may signal the puncturing pattern in an EHT-SIG field of the EHT PPDU which follows a U-SIG field in the EHT PPDU. The U-SIG field may contain an EHT-SIG Compression subfield indicating either a compression mode or a non-compression mode.

In some implementations, in signaling the puncturing pattern, processor 512 or processor 522 may provide a global puncturing indication (e.g., with a bandwidth dependent table) in the EHT-SIG field for an OFDMA transmission by: (a) setting a bit of the EHT-SIG Compression subfield to 0 to indicate the non-compression mode; and (b) indicating a puncturing pattern in a plurality of RU allocation subfields in the EHT-SIG field.

### Illustrative Processes

FIG. 6 illustrates an example process 600 in accordance with an implementation of the present disclosure. Process 600 may represent an aspect of implementing various proposed designs, concepts, schemes, systems and methods described above. More specifically, process 600 may represent an aspect of the proposed concepts and schemes pertaining to signaling of punctured sub-channels in wireless communications in accordance with the present disclosure. Process 600 may include one or more operations, actions, or functions as illustrated by one or more of blocks 610 and 620. Although illustrated as discrete blocks, various blocks of process 600 may be divided into additional blocks, combined into fewer blocks, or eliminated, depending on the desired implementation. Moreover, the blocks/sub-blocks of process 600 may be executed in the order shown in FIG. 6 or, alternatively in a different order. Furthermore, one or more of the blocks/sub-blocks of process 600 may be executed repeatedly or iteratively. Process 600 may be implemented by or in apparatus 510 and apparatus 520 as well as any variations thereof. Solely for illustrative purposes and without limiting the scope, process 600 is described below in the context of apparatus 510 as communication entity 110 (e.g., a transmitting device whether a STA or an AP) and apparatus 520 as communication entity 120 (e.g., a receiving device whether a STA or an AP) of a wireless network such as a WLAN in accordance with one or more of IEEE 802.11 standards. Process 600 may begin at block 610.

At 610, process 600 may involve a puncturing pattern being signaled with an EHT PPDU between a first STA (e.g., apparatus 510 implemented in communication entity 110 as a non-AP STA) and a second STA (e.g., apparatus 520 implemented in communication entity 120 as an AP). For instance, processor 512 of apparatus 510 may receive, via transceiver 516, the EHT PPDU that indicates the puncturing pattern from apparatus 520, or vice versa. Process 600 may proceed from 610 to 620.

At 620, process 600 may involve the first STA and the second STA communicating with each other based on the signaled puncturing pattern. For instance, processor 512 may transmit to and/or receive from apparatus 520 based on the signaled puncturing pattern.

In some implementations, in signaling the puncturing pattern, process 600 may involve processor 512 or processor 522 signaling the puncturing pattern in a U-SIG field of the EHT PPDU.

In some implementations, the U-SIG field may contain an EHT-SIG Compression subfield and a Sub-Channel Puncturing Indication subfield. The EHT-SIG Compression subfield may indicate either a compression mode or a non-compression mode, and the Sub-Channel Puncturing Indication subfield may contain puncturing information.

In some implementations, in signaling the puncturing pattern, process 600 may involve processor 512 or processor 522 providing a global puncturing indication (e.g. with a bandwidth dependent table) in the U-SIG field for a non-OFDMA transmission by: (a) setting a bit of the EHT-SIG Compression subfield to 1 to indicate the compression mode; and (b) indicating whole-band puncturing information in the Sub-Channel Puncturing Indication subfield.

In some implementations, in indicating the whole-band puncturing information, process 600 may involve processor 512 or processor 522 indicating the whole-band puncturing information on a 80MHz bandwidth, a 160MHz bandwidth or a 320MHz bandwidth in an event that the EHT PPDU is a 80MHz PPDU, a 160MHz PPDU or a 320MHz PPDU, respectively.

In some implementations, in indicating the whole-band puncturing information, process 600 may involve processor 512 or processor 522 indicating the whole-band puncturing information with a first number of entries, a second number of entries or a third number of entries in an event that the EHT PPDU is a 80MHz PPDU, a 160MHz PPDU or a 320MHz PPDU, respectively. The first number, the second number and the third number may be different from each other.

In some implementations, in signaling the puncturing pattern, process 600 may involve processor 512 or processor 522 providing a local puncturing indication in the U-SIG field for an OFDMA transmission by: (a) setting a bit of the EHT-SIG Compression subfield to 0 to indicate the non-compression mode; and (b) indicating per-80MHz segment puncturing information in the Sub-Channel Puncturing Indication subfield.

In some implementations, in indicating the per-80MHz segment puncturing information, process 600 may involve processor 512 or processor 522 indicating puncturing information on a 80MHz segment using a 4-bit bitmap with each bit indicating whether or not a respective 20MHz sub-channel of four 20MHz sub-channels in the 80MHz segment is punctured.

In some implementations, in signaling the puncturing pattern, process 600 may involve processor 512 or processor 522 signaling the puncturing pattern in an EHT-SIG field of the EHT PPDU which follows a U-SIG field in the EHT PPDU. The U-SIG field may contain an EHT-SIG Compression subfield indicating either a compression mode or a non-compression mode.

In some implementations, in signaling the puncturing pattern, process 600 may involve processor 512 or processor 522 providing a global puncturing indication (e.g., with a bandwidth dependent table) in the EHT-SIG field for an OFDMA transmission by: (a) setting a bit of the EHT-SIG Compression subfield to 0 to indicate the non-compression mode; and (b) indicating a puncturing pattern in a plurality of RU allocation subfields in the EHT-SIG field.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
signaling a puncturing pattern with an extremely-high-throughput, in the following also referred to as EHT, physical-layer protocol data unit, in the following also referred to as PPDU, (610); and
communicating between a first station, in the following also referred to as STA, and a second STA based on the signaled puncturing pattern (620).

2. The method of Claim 1, wherein the signaling of the puncturing pattern comprises signaling the puncturing pattern in a Universal Signal, in the following also referred to as U-SIG, field of the EHT PPDU.

3. The method of Claim 2, wherein the U-SIG field contains an EHT Signal, in the following also referred to as EHT-SIG, Compression subfield and a Sub-Channel Puncturing Indication subfield, wherein the EHT-SIG Compression subfield indicates either a compression mode or a non-compression mode, and wherein the Sub-Channel Puncturing Indication subfield contains puncturing information.

4. The method of Claim 3, wherein the signaling of the puncturing pattern comprises providing a global puncturing indication in the U-SIG field for a non-orthogonal frequency-division multiple access, in the following also referred to as non-OFDMA, transmission by:
setting a bit of the EHT-SIG Compression subfield to 1 to indicate the compression mode; and
indicating whole-band puncturing information in the Sub-Channel Puncturing Indication subfield.

5. The method of Claim 4, wherein the indicating of the whole-band puncturing information comprises indicating the whole-band puncturing information on a 80MHz bandwidth, a 160MHz bandwidth or a 320MHz bandwidth in an event that the EHT PPDU is a 80MHz PPDU, a 160MHz PPDU or a 320MHz PPDU, respectively.

6. The method of Claim 4, wherein the indicating of the whole-band puncturing information comprises indicating the whole-band puncturing information with a first number of entries, a second number of entries or a third number of entries in an event that the EHT PPDU is a 80MHz PPDU, a 160MHz PPDU or a 320MHz PPDU, respectively, and wherein the first number, the second number and the third number are different from each other.

7. The method of any one of Claims 3 to 6, wherein the signaling of the puncturing pattern comprises providing a local puncturing indication in the U-SIG field for an orthogonal frequency-division multiple access, in the following also referred to as OFDMA, transmission by:
setting a bit of the EHT-SIG Compression subfield to 0 to indicate the non-compression mode; and
indicating per-80MHz segment puncturing information in the Sub-Channel Puncturing Indication subfield.

8. The method of Claim 7, wherein the indicating of the per-80MHz segment puncturing information comprises indicating puncturing information on a 80MHz segment using a 4-bit bitmap with each bit indicating whether or not a respective 20MHz sub-channel of four 20MHz sub-channels in the 80MHz segment is punctured.

9. The method of any one of Claims 1 to 8, wherein the signaling of the puncturing pattern comprises signaling the puncturing pattern in an EHT-SIG field of the EHT PPDU which follows a U-SIG field in the EHT PPDU, and wherein the U-SIG field contains an EHT-SIG Compression subfield indicating either a compression mode or a non-compression mode.

10. The method of Claim 9, wherein the signaling of the puncturing pattern comprises providing a global puncturing indication in the EHT-SIG field for an OFDMA transmission by:
setting a bit of the EHT-SIG Compression subfield to 0 to indicate the non-compression mode; and
indicating a puncturing pattern in a plurality of resource unit, in the following also referred to as RU, allocation subfields in the EHT-SIG field.

11. An apparatus, comprising:
a transceiver (516) configured to communicate wirelessly; and
a processor (512) coupled to the transceiver (516) and configured to perform operations comprising the method steps as defined in any one of the preceding claims.
